# DEMANDE DE BREVET EUROPEEN

(11) **EP 2 835 066 A1**
(43) Date de publication de la demande: **11.02.2015**
(21) Numéro de dépôt: 14179292.9
(22) Date de dépôt: 31.07.2014
(51) Int. Cl.: A41D 19/015, A41H 43/04, B32B 37/12

(54) **Procédé d'assemblage d'une semelle sur un article**

(30) Priorité: 08.08.2013 FR 1357878
(71) Demandeur: Espuna, 11205 Lezignan-Corbières Cedex (FR)
(72) Inventeur: Pages, Franck, 11205 LEZIGNAN CORBIERES (FR)
(74) Mandataire: Cornuejols, Christophe

(57) **Abrégé**

L'invention concerne un procédé d'assemblage d'une semelle (100) sur tout ou partie d'un article. Ledit procédé comporte les étapes de :
- superposition d'un film thermocollant et de la semelle sur tout ou partie de l'article, de telle sorte que ledit film thermocollant est positionné entre ledit article et ladite semelle,
- pression à chaud de l'ensemble superposé pendant une durée, à pression, et à une température prédéterminées suffisantes pour ramollir le film thermocollant,
- pression à température ambiante de l'ensemble à une pression et pendant une durée prédéterminées suffisantes pour durcir le film thermocollant.

## Description

### DOMAINE TECHNIQUE

Le domaine de l'invention est le domaine des articles. Plus précisément, l'invention concerne un procédé d'assemblage d'une semelle sur un article. Les domaines d'application de l'invention sont nombreux, en particulier dans le bâtiment, la sécurité ou les équipements de sport.

### ÉTAT DE LA TECHNIQUE

De manière générale, lors de la confection d'un article, les zones soumises à de fortes contraintes sont renforcées par une semelle. Une semelle est par définition une pièce qui en double une autre afin notamment d'apporter audit article des propriétés supplémentaires telles qu'une protection de renfort notamment contre les déchirures, les coupures, les frottements etc. Par exemple des frigoristes, des travailleurs dans les pays froids, des manipulateurs d'azote ou d'hélium liquide ont besoin d'articles renforcés thermiquement.

Un article généralement renforcé est le gant. Un gant est ici un article fait de peau, d'étoffe ou de tout autre matériau qui épouse la forme de la main et des doigts, et qui est utilisé comme accessoire de l'habillement ou comme protection dans diverses activités. Pour renforcer un gant, il est par exemple connu de piquer la semelle sur une partie dudit gant à renforcer. Le terme piquer signifie ici coudre à l'aide d'une machine ou manuellement. Lorsque la semelle est piquée à un gant tricoté sans couture par exemple, ladite semelle est fixée au gant uniquement aux niveaux des coutures créées par le piquage, généralement localisées au niveau du contour de la semelle. Cependant lesdites coutures constituent une zone facilement accrochable. Lors d'un accrochage, une partie des coutures est très souvent détruite ce qui entraîne le détachement de ladite semelle. Ce type de gant par piquage présente ainsi l'inconvénient majeur d'être très fragile. Un autre inconvénient pour ces gants par piquage est son coût élevé en main-d'oeuvre.

Il est également connu d'enduire tout ou partie du gant par un revêtement protecteur dans un matériau tel que du polychlorure de vinyle (PVC). L'enduction consiste en une étape d'application dudit matériau sous forme liquide puis d'une étape de séchage. Un gant enduit présente l'avantage, contrairement au gant piqué, d'unir la semelle sur toute la surface de contact avec le gant, contrairement aux coutures situées uniquement au niveau du contour de la semelle pour le gant piqué. Ledit gant enduit présente cependant l'inconvénient d'être un gant ne respirant pas ou très peu, c'est-à-dire qui n'évacue pas ou très peu l'humidité de l'intérieur vers l'extérieur, ce qui engendre un phénomène de transpiration pour un utilisateur qui porte un tel gant. Un tel gant enduit peut s'avérer inconfortable notamment à cause du toucher plastique de la partie enduite. De plus, si le matériau utilisé pour enduire le gant est dangereux, la fabrication de gants enduits pose des problèmes vis-à-vis de l'environnement. Le dispositif utilisé pour réaliser ce type de gants enduits est un dispositif volumineux et onéreux.

### EXPOSÉ DE L'INVENTION

La présente invention a pour objectif de remédier à tout ou partie des limitations des solutions de l'art antérieur, notamment celles exposées ci-avant, en proposant une solution qui permette de lier une semelle à un article notamment en matériau textile, cuir, ou en polymère sur toute une surface de contact avec le gant de ladite semelle, tout en apportant un confort à l'utilisateur portant ledit gant, et en rendant l'article en matériau textile, cuir ou en polymère encore plus résistant. On entend par article, un article d'habillement tel qu'un pantalon, un tablier, un gant, etc.

A cet effet, et selon un premier aspect, l'invention concerne un procédé d'assemblage d'une semelle sur tout ou partie d'un article en matériau textile, cuir ou en polymère. Ledit procédé comporte les étapes de :
- superposition d'un film thermocollant et de la semelle sur tout ou partie de l'article de telle sorte que ledit film thermocollant est positionné entre ledit article et ladite semelle,
- pression à chaud de l'ensemble superposé pendant une durée, à une pression, et à une température prédéterminées suffisantes pour ramollir le film thermocollant,
- pression à température ambiante de l'ensemble à une pression et pendant une durée prédéterminées suffisantes pour durcir le film thermocollant.

L'ensemble superposé correspond à la superposition du film thermocollant, de la semelle et de l'article.

L'opération de pression à chaud de l'ensemble est effectuée à une pression de l'ordre de 6 à 7 bars. La pression à température ambiante de l'ensemble est également réalisée à une pression de l'ordre de 6 à 7 bars.

On appelle thermocollant une matière dont le pouvoir adhésif est révélé par la chaleur. Un thermocollant peut comporter par exemple une composition thermoplastique ou thermofusible. On entend par « composition thermoplastique ou thermofusible » dans la présente invention, une composition qui, de manière réversible, se ramollit sous l'action de la chaleur et se durcit en refroidissant.

Dans un exemple de mise en oeuvre, lorsque le film thermocollant est constitué d'une colle thermo-activante de type polyuréthane aliphatique, l'étape de pression à chaud est réalisée à une pression comprise de préférence entre 6 et 7 bars, pendant une durée de préférence de 5 secondes, et à une température de l'ordre de 200°C.

La température de pression à chaud est choisie de sorte à être bien supérieure à la température de fusion du matériau de l'article et de la semelle.

Dans un exemple de mise en oeuvre, lorsque le film thermocollant est constitué d'une colle thermo-activante de type polyuréthane aliphatique, l'étape de pression à température ambiante est réalisée à une pression comprise de préférence entre 6 et 7 bars, pendant une durée de préférence comprise entre 5 et 10 secondes. Une température ambiante est la température d'une pièce, généralement comprise entre 10 et 35°C.

L'étape de pression à chaud de l'ensemble superposé permet de ramollir le film thermocollant. En d'autres termes, le fait d'exercer une pression de l'ensemble superposé pendant ladite étape de pression à chaud permet de maintenir l'ensemble superposé immobile. C'est le fait de chauffer l'ensemble à une température prédéterminée suffisante qui permet de ramollir le film thermocollant et de rendre liquide par exemple la composition thermoplastique ou une colle thermo-activante du film thermocollant. En devenant liquide, la composition thermoplastique ou une colle thermo-activante pénètre dans les pores des matériaux situés de part et d'autre du film thermocollant c'est-à-dire dans les pores de la semelle et de l'article.

Dès que le film thermocollant est ramolli, une étape de pression à température ambiante de l'ensemble est réalisée. Au début de l'étape de pression à température ambiante le film thermocollant est encore ramolli et la composition thermoplastique est encore liquide. En d'autres termes, la composition thermoplastique est encore malléable au début de l'étape de pression à température ambiante de l'ensemble. Le fait d'exercer une pression pendant cette étape, permet que la composition thermoplastique pénètre dans des épaisseurs des matériaux situés de part et d'autre du film thermocollant. En d'autres termes, ladite étape de pression à température ambiante de l'ensemble permet à la composition thermoplastique de pénétrer davantage au coeur des matériaux situés de part et d'autre du film thermocollant. En se refroidissant, la composition thermoplastique se solidifie. En d'autres termes, le fait de placer l'ensemble dans un lieu à une température ambiante permet de faire baisser la température de la composition thermoplastique. Pour résumer, l'étape de pression à température ambiante de l'ensemble permet d'améliorer la pénétration de la composition thermoplastique à travers la semelle et l'article, et le refroidissement de la composition thermoplastique permet de fortement augmenter la cohésion des composants de l'ensemble, c'est-à-dire de l'article, du film thermocollant et de la semelle.

Dans un exemple de mise en oeuvre de l'invention, afin de tester l'adhésion de l'ensemble, des tests d'adhésion appelés « tests de pelage » sont effectués sur des ensembles identiques. On entend par test de pelage le fait de tirer sur la semelle thermocollée à l'article, de mesurer la force nécessaire au décollage de la semelle ainsi que l'énergie totale dépensée.

Des tests d'adhésion ont été effectuées sur deux ensembles identiques utilisant chacun un article de même matière. Dans un premier exemple, l'ensemble est assemblé par un procédé d'assemblage comportant une étape de superposition d'un film thermocollant et d'une semelle sur un article de telle sorte que le film thermocollant soit positionné entre l'article et la semelle. Ce procédé comporte une étape de pression à chaud de l'ensemble superposé pendant une durée, à une pression, et à une température prédéterminées suffisantes pour ramollir le film thermocollant. Par contre ce procédé ne comporte pas d'étape de pression à température ambiante de l'ensemble. Un test de pelage a été effectué sur cet ensemble et démontre qu'il faut une force d'environ 36 N pour parvenir à décoller la semelle de l'article. Dans un deuxième exemple, l'ensemble est assemblé par le procédé d'assemblage de l'invention, et il faut une force d'environ 63 N pour parvenir à décoller la semelle de l'article.

Ces tests d'adhésion réalisés sur des ensembles utilisant des articles de mêmes matières démontrent bien que l'étape de pression à température ambiante de l'ensemble permet fortement d'améliorer la cohésion de l'ensemble et donc la qualité de l'ensemble.

De telles dispositions permettent de lier une semelle à un article sur toute une surface de contact entre ladite semelle et ledit article. Ceci permet une meilleure cohésion de l'ensemble ce qui diminue le risque de scission entre l'article et la semelle.

Ces dispositions permettent de maintenir l'ensemble immobile le temps que le film thermocollant refroidisse et se solidifie. Avantageusement, lorsque ledit film thermocollant refroidit, la superposition du film thermocollant et de la semelle sur tout ou partie de l'article est maintenue immobile.

Ces dispositions permettent également une meilleure tenue dans le temps de l'ensemble.

Un autre avantage dudit procédé, est de pouvoir réaliser en une seule opération, le thermocollage du film thermocollant avec le renfort et le thermocollage du film thermocollant avec l'article.

De manière inattendue, ce procédé fonctionne pour tout type de matériau pour l'article, qu'il soit en cuir, en textile ou autre, et pour la semelle, qu'elle soit en cuir ou en polymère par exemple.

Dans des modes particuliers de mise en oeuvre, le procédé peut comporter en outre l'une ou plusieurs des caractéristiques suivantes, prises isolément ou selon toutes les combinaisons techniquement possibles.

Dans un mode particulier de mise en oeuvre, l'étape de pression à chaud de l'ensemble superposé est réalisée à une température supérieure à la température de fusion d'une composition thermofusible constituant le film thermocollant. Le rapport de température entre la température de fusion de la composition thermofusible et la température à appliquer lors de l'étape de pression à chaud est d'au moins 50 %.

De telles dispositions permettent de parvenir à la température de fusion de la composition du film thermocollant plus rapidement.

Dans un mode particulier de mise en oeuvre, ledit procédé comporte une étape de collage d'une face du film thermocollant sur une face de la semelle. Ladite étape est réalisée avant l'étape de superposition du film thermocollant et de la semelle sur l'article en matériau textile, cuir ou en polymère.

De plus, en recourant à des semelles avec des films thermocollants, du commerce, la superposition de la semelle sur l'article est certaine, ce qui participe à la fabrication d'un article renforcé de qualité.

De telles dispositions offrent un gain de temps de réalisation du procédé en diminuant le nombre d'étapes à effectuer pour réaliser ledit procédé.

De préférence, le film thermocollant et la semelle présentent des formes et des dimensions similaires.

L'invention est également relative à un article comportant une semelle thermocollée réalisé à partir du procédé suivant l'un de ses modes de mise en oeuvre.

Un tel article s'affranchit des inconvénients actuels, tels que les coutures situées aux niveaux du contour de la semelle pour lier ladite semelle à l'article, tout en conservant un confort d'utilisation.

Dans un mode particulier de réalisation de l'article, afin de permettre une meilleure maniabilité de l'article, la semelle comporte une encoche au niveau de pliures de l'article.

Dans un mode particulier de réalisation de l'article, afin de permettre une meilleure flexibilité de l'article, la semelle comporte un évidement au niveau de pliures de l'article.

Dans un mode particulier de réalisation, l'article est réalisé sous forme d'un gant qui comporte la semelle thermocollée sur tout ou partie d'une face palmaire et/ou dorsale dudit gant. La face palmaire du gant est la face en contact avec la paume de la main de l'utilisateur du gant. La face dorsale du gant est la face en contact avec le dos de la main de l'utilisateur du gant.

Le gant est de type tricoté ou coupé/cousu.

### PRÉSENTATION DES FIGURES

L'invention sera mieux comprise à la lecture de la description suivante, donnée à titre d'exemple nullement limitatif, et faite en se référant à l'unique figure qui représente une vue d'une face palmaire d'un gant selon un exemple de réalisation de l'invention.

Pour des raisons de clarté, les éléments représentés ne sont pas à l'échelle, sauf mention contraire.

### DESCRIPTION DÉTAILLÉE D'UN MODE DE RÉALISATION DE L'INVENTION

Dans la suite de la description, on se place dans le cas où l'article en matériau textile, cuir ou en polymère, tel que du latex, est un gant sans que cet exemple soit restrictif de l'invention. Ainsi, l'invention s'applique également à tout article en matériau textile, cuir ou en polymère nécessitant une protection locale tel qu'un pantalon ou une veste.

Un gant est un terme générique signifiant aussi bien un gant cinq doigts, que des moufles ou des mitaines. Un gant de type cinq doigts est un gant recouvrant les cinq doigts d'une main. Les moufles sont un type de gant recouvrant les extrémités des doigts mais sans séparation entre lesdits doigts, sauf pour le pouce. Les mitaines sont un type de gant dont les extrémités des doigts ne sont pas recouvertes par ledit type de gant.

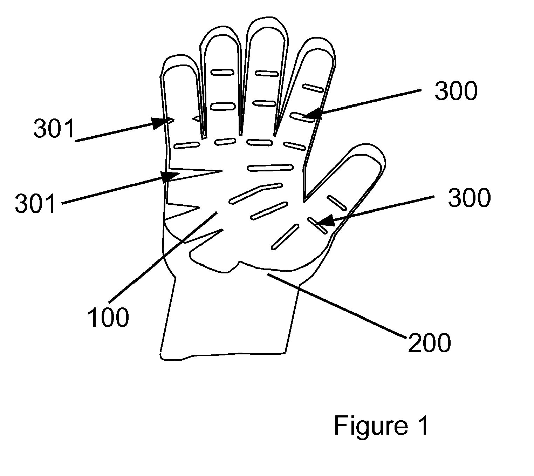

La figure 1 illustre un exemple de gant 200 comportant une semelle 100 thermocollée, assemblés selon un procédé décrit ultérieurement. Le gant 200 représenté est un gant de type cinq doigts.

Préférentiellement, le gant 200 est un gant de type tricoté sans coutures. Cependant dans un autre exemple de réalisation, le gant 200 est un gant de type coupé/cousu.

De préférence, le gant 200 est réalisé à partir de fibres de polyamide, de polyester, de verre et de coton.

Dans d'autres exemples de réalisation, le gant 200 est réalisé dans d'autres matières textiles, en cuir ou en polymère.

Un gant tricoté est constitué de fibres qui sont filées et tricotées. Lesdites fibres sont par exemple des fibres de polyamide, de polyester, de coton etc. Avantageusement, un gant tricoté ne présente pas de coutures.

Les gants présentant des coutures, quelque soit le matériau desdits gants les constituant, sont appelés des gants coupés/cousus.

Dans la figure 1, la semelle 100 est située sur une face palmaire du gant 200 c'est-à-dire du côté de la paume de la main d'un utilisateur portant le gant. Dans un autre exemple de réalisation d'un gant 200, ledit gant peut comporter la semelle 100 sur une face dorsale du gant, qui est le côté opposé à la face palmaire. Dans un autre exemple, le gant 200 peut comporter une première semelle 100 sur sa face palmaire et une seconde semelle 100 sur sa face dorsale.

La semelle 100 peut-être utilisée comme renfort permettant d'ajouter un gain de performance en termes de résistance à l'abrasion, à la coupure, à la déchirure et/ou à la perforation par exemples. Alternativement, la semelle 100 peut comporter des composés conducteurs, magnétiques, fluorescents, phosphorescents...

De préférence, la semelle 100 se compose d'une seule pièce. Alternativement, ledit gant peut comporter plusieurs semelles 100 sur une même face.

Dans un mode de réalisation préféré, la semelle 100 comporte des évidements 300 et/ou des encoches 301 situés par exemple sensiblement au niveau des jointures entre des phalanges et/ou au niveau de pliures d'une paume d'une main de l'utilisateur. Lesdits évidements 300 et/ou encoches 301 permettent d'améliorer le confort de l'utilisateur et la maniabilité du gant.

De préférence, la semelle 100 est réalisée en cuir. Dans un autre exemple de réalisation du gant 200, ladite semelle peut être réalisée en textile ou en polymère, comme par exemple le polychlorure de vinyle (PVC).

Un gant composé de textile, enduit ou non-enduit, ou de cuir, ou en polymère, peut comporter une semelle thermocollée composée de textile, enduit ou non-enduit, de cuir ou de polymère.

Afin de réaliser le gant 200 renforcé avec une semelle sur la face palmaire du gant tel que décrit précédemment, le procédé objet de l'invention comprend plusieurs étapes.

Dans une première étape, la semelle 100, comportant une face avec un film thermocollant, est superposée sur tout ou partie du gant 200 à protéger. Dans la suite de la description, on appellera « ensemble », la superposition du film thermocollant, de la semelle 100 et du gant 200.

On appelle thermocollant une matière dont le pouvoir adhésif est révélé par la chaleur.

Dans un mode de mise en oeuvre de cette première étape, le gant 200 est positionné sur un plateau inférieur d'un organe de presse, de telle sorte que la face dorsale dudit gant est en contact avec le plateau inférieur.

La semelle est positionnée sur la partie de la face palmaire du gant à protéger. La semelle 100 est positionnée sur le gant de façon telle que le film thermocollant est situé du côté de la face palmaire du gant 200.

Dans une deuxième étape, l'ensemble est pressé à chaud pendant une durée, à température et à pression prédéterminées.

Dans un mode de mise en oeuvre, un plateau supérieur de l'organe de presse est abaissé de façon telle que l'ensemble soit enfermé entre le plateau inférieur et le plateau supérieur dudit organe de presse.

Dans un exemple de mise en oeuvre, la pression exercée sur l'ensemble est sensiblement de six à sept bars. Cette étape de pression à chaud s'effectue à environ 200°C pendant environ cinq secondes pour une colle thermo-activante de type polyuréthane aliphatique. Cette colle présente une température de fusion de l'ordre de 105°C à 115°C. Au cours des cinq secondes durant lesquelles l'étape de pression à chaud est effectuée, la température, au niveau de l'ensemble, n'a pas eu le temps d'atteindre les 200°C demandés. Par contre, la température a atteint la température de fusion de la colle utilisée, ce qui est suffisant pour ramollir la colle.

Préférentiellement, le film thermocollant est composé d'une colle thermo-activante présentée sous la forme d'une grille sur ledit film thermocollant. Cette forme de grille de ladite colle thermo-activante permet de participer à l'aération du gant 200, et d'obtenir une meilleure dextérité de l'ensemble. Le choix de la colle thermo-activante dépend des applications souhaitées dudit gant. Cette colle de type polyuréthane aliphatique, permet entre autres de fabriquer des gants avec une semelle thermocollée, pour obtenir une meilleure résistance à l'abrasion, pour obtenir un meilleur grip pour un élagueur par exemple, ou pour obtenir une conduction électrique lorsque la semelle comporte des composés conducteurs.

L'étape de pression à chaud s'effectue ainsi pour la plupart des matériaux. Pour un matériau dit « sensible » comme le polychlorure de vinyle (PVC), la pression à chaud s'effectue de préférence à environ 130°C pendant environ dix secondes, la température de l'ensemble est inférieure à 130°C. La température pour effectuer la pression à chaud est préférentiellement supérieure à la température de fusion de la colle thermo-activante du film thermocollant utilisé. Cependant la température atteinte pendant l'étape de pression à chaud de l'ensemble doit être également inférieure à la température de résistance du matériau du gant 200 et du matériau de la semelle 100.

Par exemple, pour ne pas endommager du polyéthylène haute ténacité, qu'il soit utilisé en semelle ou en gant, la température à atteindre lors de l'étape de pression à chaud ne doit pas excéder 147°C. La température de l'ensemble est donc inférieure à la température de pression à chaud qui se trouve être ici de 147°C.

Cette deuxième étape permet par le biais du chauffage de l'ensemble, de diluer la colle thermo-activante du film thermocollant.

Dans une troisième étape, l'ensemble est pressé à température ambiante pendant une durée et à une pression prédéterminées.

L'ensemble est alors placé sur un plateau inférieur d'une seconde presse pour effectuer une pression à température ambiante. Une température ambiante signifie température de la pièce où est réalisé ce procédé, et est généralement comprise entre 15 et 35°C.

Alternativement, l'ensemble est pressé à froid pendant une durée, une température et à une pression prédéterminées. L'ensemble est placé sur un plateau inférieur d'une seconde presse pour effectuer une pression à froid. La pression à froid s'effectue à une température de l'ordre de 5 à 15°C.

Pour tous types de matériaux du gant 200 et de la semelle 100, ladite pression est sensiblement effectuée à six ou sept bars au plus. Le temps de pression à température ambiante ou à froid de l'ensemble, est sensiblement équivalent au temps de superposition du film thermocollant et de la semelle sur tout ou partie de l'article et de pression à chaud de l'ensemble superposé. Ainsi un opérateur peut réaliser l'étape de pression à température ambiante ou de pression à froid en temps masqué. Avantageusement, pendant l'étape de pression à température ambiante ou de pression à froid de l'ensemble, un autre ensemble est superposé et pressé à chaud.

Cette troisième étape, qu'elle soit réalisée par pression à température ambiante ou par pression à froid, permet de maintenir une pression uniforme sur l'ensemble le temps que la colle thermo-activante refroidisse jusqu'à sa température de durcissement. En refroidissant la colle thermo-activante du film thermocollant est solidifiée et lie définitivement l'ensemble lorsque ladite colle atteint sa température de solidification. En refroidissant, la colle utilisée dans cet exemple, qui est de type polyuréthane aliphatique, commence à se solidifier à une température d'environ 85°C.

La pression de l'ensemble effectuée à froid permet d'accélérer la baisse de température de l'ensemble et par conséquent le durcissement du film thermocollant.

A l'issue de cette troisième étape, la semelle 100 est thermocollée sur le gant 200.

Le procédé objet de l'invention permet d'aboutir à un gant thermocollé présentant de nombreux avantages. En effet, ledit gant thermocollé présente entre autre, l'avantage de lier en continu la semelle, sur toute sa surface de contact, au gant. Cette adhésion sur toute la surface de la semelle permet de limiter très fortement la possibilité de séparer accidentellement la semelle du gant lors d'accroches.

Le procédé objet de l'invention apporte également un confort non négligeable à l'utilisateur portant ledit gant en terme de respirabilité.

De plus, lorsqu'une semelle nécessite d'être remplacée, par exemple suite à une usure, le procédé consiste à chauffer le gant renforcé à une température suffisante de sorte que la colle ramollisse, c'est-à-dire à une température supérieure à la température de fusion de la colle utilisée, afin de séparer le gant et la semelle. Le procédé objet de l'invention peut être à nouveau mis en oeuvre en ajoutant une nouvelle semelle, après avoir préalablement nettoyé le gant.

De tels gants respectent la norme européenne et française NF EN 388 des gants de protection contre les risques mécaniques.

A titre d'exemple, des essais de résistance à l'abrasion, à la coupure, à la déchirure et à la perforation sur trois types de gant ont été réalisés sur :
- un gant A tricoté en fibres de polyamide, de polyester, de verre et de coton, sans semelle,
- un gant B, correspondant au gant A avec une semelle en fleur de bovin hydrofuge thermocollée, d'épaisseur comprise entre 0,8 à 1 mm. La fleur de bovin est la structure de la peau où est implanté le poil dudit bovin.
- un gant C, correspondant au gant A avec une semelle en croûte de bovin thermocollée, d'épaisseur 1 mm. La croûte de bovin est la partie opposée à la fleur de bovin.
- un gant D, correspondant au gant A avec une semelle en fleur de bovin hydrofuge, identique à la semelle du gant B mais piquée sur le gant.

Les résultats des essais sont illustrés dans le tableau ci-dessous :

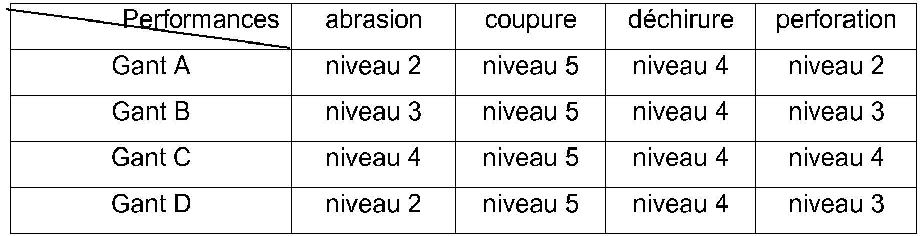

On se reportera au tableau 1 de la norme européenne et française NF EN 388 pour la signification des niveaux de performances.

Les essais permettent de constater que le gant B présente les mêmes performances en termes de résistance contre la coupure et la déchirure que le gant A.

Par contre, le gant B présente une performance accrue en terme de résistance à l'abrasion et à la perforation.

De plus, bien que non illustré par le tableau précédent, le gant B présente une meilleure résistance à la pénétration de l'eau que le gant A, car la fleur de bovin est hydrofuge.

Les essais permettent de constater que le gant C présente les mêmes performances en termes de résistance à la coupure et à la déchirure que le gant A.

Par contre, le gant C présente une performance accrue en terme de résistance à l'abrasion et à la perforation.

Les différentes matières des semelles 100 permettent donc différents gains en performance intéressants suivant les applications souhaitées des gants 200.

De plus, les essais permettent de constater que le gant B présente une meilleure résistance à l'abrasion que le gant D alors que ces deux gants comportent le même gant A et la même semelle. Cette différence démontre qu'une semelle thermocollée apporte plus d'avantages par rapport à la résistance à l'abrasion qu'une semelle piquée.

La description ci-avant illustre clairement que par ses différentes caractéristiques et leurs avantages, la présente invention atteint les objectifs qu'elle s'était fixés. En particulier, la présente invention permet d'obtenir un gant plus résistant et plus confortable.

De plus, en comparaison avec un gant renforcé obtenus par des coutures, le temps de production des gants thermocollés se trouve grandement amélioré, et les coûts de fabrication sont également diminués.

Par rapport à des gants enduits, le dispositif utilisé est beaucoup moins volumineux et ne nécessite pas un investissement conséquent.

Le gant renforcé obtenu par thermocollage est donc un excellent compromis entre le gant renforcé par coutures, coûteux en main d'oeuvre, et les gants enduits à bas coûts.

## Revendications

1. Procédé d'assemblage d'une semelle (100) sur tout ou partie d'un article **caractérisé en ce que** ledit procédé comporte les étapes de :
- superposition d'un film thermocollant et de la semelle (100) sur tout ou partie de l'article, de telle sorte que ledit film thermocollant est positionné entre ledit article et ladite semelle,
- pression à chaud de l'ensemble superposé pendant une durée, à une pression, et à une température prédéterminées suffisantes pour ramollir le film thermocollant,
- pression à température ambiante de l'ensemble à une pression et pendant une durée prédéterminées suffisantes pour durcir le film thermocollant.

2. Procédé selon l'une des revendications précédentes, dans lequel l'étape de pression à chaud est réalisée à une température supérieure à la température de fusion d'une composition thermofusible constituant le film thermocollant.

3. Procédé selon la revendication précédente, comportant une étape de collage d'une face du film thermocollant sur une face de la semelle (100), ladite étape étant réalisée avant l'étape de positionnement du film thermocollant et de la semelle (100) sur l'article.

4. Article comportant une semelle (100) thermocollée réalisé à partir du procédé décrit selon l'une quelconque des revendications précédentes dans lequel la semelle (100) comporte un évidement (300).

5. Article selon la revendication 4, dans lequel la semelle (100) comporte une encoche (301).

6. Article selon l'une des revendications 4 à 5, sous forme d'un gant (200) comportant la semelle (100) thermocollée sur tout ou partie d'une face palmaire et/ou dorsale dudit gant (200).
